# EUROPEAN PATENT APPLICATION

(11) **EP 4 737 749 A1**
(43) Date of publication of application: **06.05.2026**
(21) Application number: 25736774.8
(22) Date of filing: 03.06.2025

(54) **THRUST MAGNETIC BEARING AND REFRIGERATION DEVICE**

(30) Priority: 10.09.2024 JP 2024156742
(71) Applicant: Daikin Industries, Ltd., Osaka-shi, Osaka 530-0001 (JP)
(72) Inventor: The designation of the inventor has not yet been filed
(74) Representative: Goddar, Heinz J.
(86) International application number: PCT/JP2025/020011
(87) International publication number: WO 2026/058513

(57) **Abstract**

With respect to a thrust magnetic bearing, a technology for appropriately holding an assembly of an insulating member and a coil in a groove portion of a core is provided. A thrust magnetic bearing 500 according to an embodiment of the present disclosure is a thrust magnetic bearing 500 for supporting a thrust load on a rotating shaft 250 of a compressor 10, the thrust magnetic bearing including an annular core 520 provided with a groove portion 521 having an annular opening 521A at an end face in an axial direction; and a coil assembly 530 including an annular insulating member 540 and a coil 550 wound around the insulating member 540, the coil assembly 530 being accommodated in the groove portion 521, wherein an outer diameter D2 of the opening 521A is shorter than an outer diameter d2 of the coil assembly 530 in a part of or an entirety of a circumferential direction, or an inner diameter D1 of the opening 521A is longer than an inner diameter d1 of the coil assembly 530 in a part of or an entirety of the circumferential direction.

## Description

### Technical Field

The present disclosure relates to a thrust magnetic bearing, etc.

### Background Art

Conventionally, with respect to a thrust magnetic bearing, a technology for arranging and holding an assembly in an annular groove portion of a core is known, the assembly including an annular insulating member such as a bobbin and a coil having a conductor wound around the insulating member (see, for example, Patent Document 1).

### Citation List

### Patent Document

[Patent Document 1] Japanese Examined Utility Model (Registration) Application Publication No. S61-24735

### Summary of Invention

### Technical Problem

However, there is room for improvement in technology for holding an assembly of an insulating member and a coil in an annular groove portion of a core.

It is an object of the present disclosure to provide a technology for appropriately holding an assembly of an insulating member and a coil in a groove portion of a core, with respect to a thrust magnetic bearing.

### Solution to Problem

According to a first aspect of the present disclosure,
there is provided a thrust magnetic bearing for supporting a thrust load on a rotating shaft (250) of a compressor (10), the thrust magnetic bearing including:
an annular core (520) provided with a groove portion (521) having an annular opening (521A) at an end face in an axial direction; and
a coil assembly (530) including an annular insulating member (540) and a coil (550) wound around the insulating member (540), the coil assembly (530) being accommodated in the groove portion (521), wherein
an outer diameter (D2) of the opening (521A) is shorter than an outer diameter (d2) of the coil assembly (530) in a part of or an entirety of a circumferential direction, or an inner diameter (D1) of the opening (521A) is longer than an inner diameter (d1) of the coil assembly (530) in a part of or an entirety of the circumferential direction.

In the present embodiment, the thrust magnetic bearing can be arranged such that the coil assembly accommodated in the groove portion and the portion of the core adjacent to the opening in the groove portion in the radial direction overlap in the radial direction. Therefore, the thrust magnetic bearing can restrict the movement of the coil assembly toward the opening side of the groove portion and properly hold the coil assembly in the groove portion of the core.

Further, in a second aspect of the present disclosure, on the premise of the first aspect described above,
the groove portion (521) may include a housing portion (521B) in which the coil assembly (530) is accommodated,
the outer diameter (D2) of the opening (521A) may be shorter than an outer diameter (D3) of the housing portion (521B) in a part of or an entirety of the circumferential direction, or the inner diameter of the opening (521A) may be longer than an inner diameter (D4) of the housing portion (521B) in a part of or an entirety of the circumferential direction, and
a dimension (W1) in an axial direction of the housing portion (521B) may be greater than or equal to a dimension (w1) in the axial direction of the coil assembly (530) in an entirety of the circumferential direction.

In a third aspect of the present disclosure, on the premise of the first or second aspect,
the outer diameter (D2) of the opening (521A) may be shorter than the outer diameter (d2) of the coil assembly (530) in a part of or an entirety of the circumferential direction, and a difference (δ) between the outer diameter (D2) of the opening (521A) and the outer diameter (d2) of the coil assembly (530) may be less than or equal to 1% of the outer diameter (d2) of the coil assembly (530), or the inner diameter (D1) of the opening (521A) may be longer than the inner diameter (d1) of the coil assembly (530) in a part of or an entirety of the circumferential direction, and a difference (δ) between the inner diameter (D1) of the opening (521A) and the inner diameter (d1) of the coil assembly (530) may be less than or equal to 1% of the inner diameter (d1) of the coil assembly (530).

In a fourth aspect of the present disclosure, on the premise of any one of the first to third aspects described above,
in a state before the coil assembly (530) is accommodated in the groove portion (521), the outer diameter (D2) of the opening (521A) may be greater than or equal to the outer diameter (d2) of the coil assembly (530) in an entirety of the circumferential direction, and the inner diameter (D1) of the opening (521A) may be less than or equal to the inner diameter (d1) of the coil assembly (530) in an entirety of the circumferential direction.

In a fifth aspect of the present disclosure, on the premise of the fourth aspect,
the core (520) includes a first core portion (520C) and a second core portion (520D) attached to the first core portion (520C), and
in a state where the second core portion (520D) is attached to the first core portion (520C), the outer diameter (D2) of the opening (521A) may be shorter than the outer diameter (d2) of the coil assembly (530) in a part of or an entirety of the circumferential direction, or the inner diameter (D1) of the opening (521A) may be longer than the inner diameter (d1) of the coil assembly (530) in a part of or an entirety of the circumferential direction.

In a sixth aspect of the present disclosure, on the premise of the fourth aspect described above,
the core (520) may include a third core portion (520E) and a fourth core portion (520F) integrally formed with the third core portion (520E), and
in a state before the coil assembly (530) is accommodated in the groove portion (521), the outer diameter (D2) of the opening (521A) may be greater than or equal to the outer diameter (d2) of the coil assembly (530) in an entirety of the circumferential direction, and the outer diameter (D2) of the opening (521A) may become shorter than the outer diameter (d2) of the coil assembly (530) in a part or an entirety of the circumferential direction due to deformation of the fourth core portion (520F) by an external force after the coil assembly (530) is accommodated in the groove portion (521), or in a state before the coil assembly (530) is accommodated in the groove portion (521), the inner diameter (D1) of the opening (521A) may be less than or equal to the inner diameter (d1) of the coil assembly (530), and the inner diameter (D1) of the opening (521A) may become longer than the inner diameter (d1) of the coil assembly (530) in a part or an entirety of the circumferential direction due to deformation of the fourth core portion (520F) by an external force after the coil assembly (530) is accommodated in the groove portion (521).

In a seventh aspect of the present disclosure, on the premise of the fourth aspect described above,
in a state before the coil assembly (530) is accommodated in the groove portion (521), the outer diameter (d2) of the coil assembly (530) may be less than or equal to the outer diameter (D2) of the opening (521A) in an entirety of the circumferential direction, and the outer diameter (d2) of the coil assembly (530) may become longer than the outer diameter (D2) of the opening (521A) in a part or an entirety of the circumferential direction due to deformation of the insulating member (540) by an external force after the coil assembly (530) is accommodated in the groove portion (521), or in a state before the coil assembly (530) is accommodated in the groove portion (521), the inner diameter (d1) of the coil assembly (530) may be greater than or equal to the inner diameter (D1) of the opening (521A) in an entirety of the circumferential direction, and the inner diameter (d1) of the coil assembly (530) may become shorter than the inner diameter (D1) of the opening (521A) in a part or an entirety of the circumferential direction due to deformation of the insulating member (540) by an external force after the coil assembly (530) is accommodated in the groove portion (521).

In an eighth aspect of the present disclosure, there is provided a refrigerating apparatus including the thrust magnetic bearing (500) of any one of the first to seventh aspects described above.

### Advantageous Effects of Invention

According to the above-described embodiment, with respect to a thrust magnetic bearing, an assembly of an insulating member and a coil can be appropriately held in a groove portion of a core.

### Brief Description of Drawings

[FIG. 1] FIG. 1 is a diagram illustrating the configuration of an example of a refrigerating apparatus.
[FIG. 2] FIG. 2 is a diagram illustrating an example of a configuration of a centrifugal compressor.
[FIG. 3] FIG. 3 is a cross-sectional view of an example of a configuration of a thrust magnetic bearing.
[FIG. 4] FIG. 4 is a diagram illustrating a first example of a structure of an electromagnet.
[FIG. 5] FIG. 5 is a diagram illustrating the first example of a structure of an electromagnet.
[FIG. 6] FIG. 6 is a diagram illustrating a second example of a structure of an electromagnet.
[FIG. 7] FIG. 7 is a diagram illustrating a third example of a structure of an electromagnet.
[FIG. 8] FIG. 8 is a diagram illustrating a fourth example of a structure of an electromagnet.
[FIG. 9] FIG. 9 is a diagram illustrating a fifth example of a structure of an electromagnet.
[FIG. 10] FIG. 10 is a diagram illustrating a sixth example of a structure of an electromagnet.
[FIG. 11] FIG. 11 is a diagram illustrating a seventh example of a structure of an electromagnet.
[FIG. 12] FIG. 12 is a diagram illustrating an eighth example of a structure of an electromagnet.
[FIG. 13] FIG. 13 is a diagram illustrating a ninth example of a structure of an electromagnet.
[FIG. 14] FIG. 14 is a diagram illustrating a tenth example of a structure of an electromagnet.
[FIG. 15] FIG. 15 is a diagram illustrating an eleventh example of a structure of an electromagnet.
[FIG. 16] FIG. 16 is a diagram illustrating a fourth modified example of a structure of an electromagnet.

### Description of Embodiments

Embodiments will be described below with reference to the drawings.

### [Configuration of refrigerating apparatus]

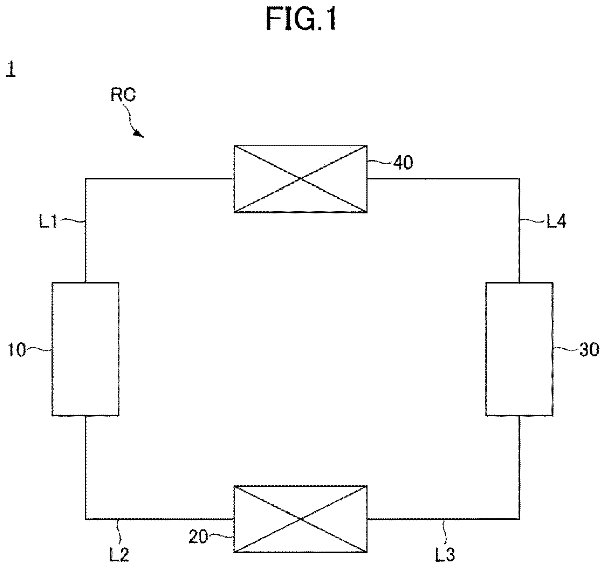

Referring to FIG. 1, the configuration of a refrigerating apparatus 1 according to the present embodiment will be described.

FIG. 1 is a diagram illustrating an example of the configuration of the refrigerating apparatus 1.

The refrigerating apparatus 1 circulates a refrigerant through a refrigerant circuit RC and uses a compression refrigeration cycle to cool and heat the target liquid or gas.

The refrigerating apparatus 1 is, for example, a chiller that cools the target liquid (liquid to be cooled) by heat exchange between the refrigerant and the target liquid, by using a compression refrigeration cycle. The liquid to be cooled is, for example, water or brine. The refrigerating apparatus 1 may be a water heater that generates hot water by heat exchange between the refrigerant and water, by using a compression refrigeration cycle. The refrigerating apparatus 1 may be, for example, an air conditioner that cools or heats the target space by heat exchange between the refrigerant and air. Hereinafter, a description will be given mainly on the case where the refrigerating apparatus 1 is a chiller.

As illustrated in FIG. 1, the refrigerating apparatus 1 includes refrigerant paths L1 to L4, a compressor 10, a heat exchanger 20, an expansion mechanism 30, and a heat exchanger 40 as components of the refrigerant circuit RC.

The refrigerant paths L1 to L4 are paths through which refrigerant flows. The refrigerant paths L1 to L4 are, for example, tubes made of metal such as steel.

The refrigerant path L1 connects the heat exchanger 40 and the inlet of the compressor 10. The refrigerant path L2 connects the outlet of the compressor 10 and the heat exchanger 20. The refrigerant path L3 connects the heat exchanger 20 and the expansion mechanism 30. The refrigerant path L4 connects the expansion mechanism 30 and the heat exchanger 40.

The compressor 10 compresses a low-pressure refrigerant flowing in from the refrigerant path L1 and discharges high-pressure refrigerant to the refrigerant path L2.

The heat exchanger 20 exchanges heat between the refrigerant flowing inside and an external heat medium (for example, cooling water).

The heat exchanger 20 is what is referred to as a condenser, which condenses a high-temperature and high-pressure refrigerant flowing in from the refrigerant path L2 and compressed by the compressor 10, by cooling the refrigerant by heat exchange with the external heat medium, thereby allowing high-pressure liquid refrigerant to flow out to the refrigerant path L3.

The expansion mechanism 30 expands a high-pressure liquid refrigerant and discharges a low-pressure gas-liquid mixed refrigerant. The expansion mechanism 30 is, for example, an expansion valve or an orifice.

The expansion mechanism 30 expands the high-pressure liquid refrigerant flowing in from the refrigerant path L3 and passing through the heat exchanger 20, and causes the low-pressure gas-liquid mixed refrigerant to flow out to the refrigerant path L4.

The heat exchanger 40 exchanges heat between the refrigerant flowing inside and the liquid to be cooled outside.

The heat exchanger 40 is what is referred to as an evaporator, which heats the low-pressure gas-liquid mixed refrigerant flowing in from the refrigerant path L4 and expanded by the expansion mechanism 30, to evaporate the refrigerant, by heat absorption from the liquid to be cooled, and causes the low-pressure gas refrigerant to flow out to the refrigerant path L1. Thus, the refrigerating apparatus 1 can cool the liquid to be cooled.

### [Configuration of compressor]

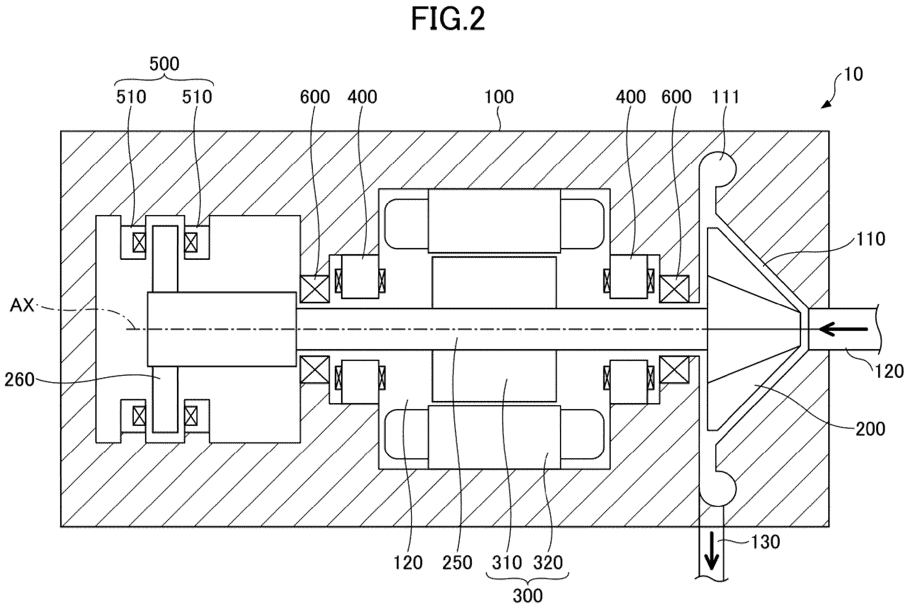

Next, the configuration of the compressor 10 according to the present embodiment will be described with reference to FIG. 2.

FIG. 2 is a diagram illustrating an example of a configuration of the compressor 10.

In FIG. 2, a cross-sectional view of a plane including the axis AX of a rotating shaft 250 is illustrated so that the contents inside a casing 100 are exposed.

Hereinafter, the direction along the axis AX of the rotating shaft 250, that is, the direction parallel to the axis AX, is referred to as the "axial direction", and each direction of the axial direction, the "radial direction" and the "circumferential direction" based on the axis AX may be referred to.

As illustrated in FIG. 2, in this example, the compressor 10 is a compressor of a centrifugal system (centrifugal compressor).

The number of stages of the compressor 10 is, for example, one stage (single stage) as illustrated in FIG. 2. The number of stages of the compressor 10 may be multiple stages of 2 or more, and the multistage compressor 10 is provided with a plurality of stages of compression parts including an impeller 200 in series.

The compressor 10 includes the casing 100, an impeller 200, the rotating shaft 250, an electric motor 300, a radial magnetic bearing 400, a thrust magnetic bearing 500, and a touchdown bearing 600.

The casing 100 is a housing for accommodating or mounting components of the compressor 10 inside.

The impeller 200 is accommodated in an impeller chamber 110 formed inside the casing 100.

The impeller 200 is attached to the rotating shaft 250 and rotates around the axis AX of the rotating shaft 250. The impeller 200 is formed such that the outer diameter of the meridional plane increases from one end (in this example, the right end of the figure) to the other end (in this example, the left end of the figure) in its own axial direction. The impeller 200 causes the refrigerant flowing in along the axial direction from a suction pipe 120 at the circumferential center at one end in the axial direction of the impeller, to flow out radially outward at the other end in the axial direction of the impeller. A diffuser 111 is provided on the outside in the radial direction at the other end in the radial direction of the impeller 200, and in the diffuser 111, the dynamic pressure (that is, kinetic energy) of the refrigerant flowing out from the impeller 200 is converted into a static pressure (i.e., pressure energy), and the compressed refrigerant flows out from the diffuser 111 to the discharge pipe 130.

The electric motor 300 is accommodated in an electric motor chamber 140 formed in the casing 100.

The electric motor 300 rotationally drives the impeller 200 by using power supplied from the outside. The electric motor 300 is, for example, a permanent magnet synchronous motor. The electric motor 300 is an inner rotor type and includes a rotor 310 attached to the rotating shaft 250, and a stator 320 arranged radially outside the rotor 310 and fixed to the inner peripheral surface of the electric motor chamber 140 in the casing 100.

The radial magnetic bearing 400 supports the radial load of the rotating shaft 250 in a non-contact manner by electromagnetic force. Two radial magnetic bearings 400 are provided, and each is fixed to the inner surface of the casing 100. The two radial magnetic bearings 400 are arranged such that each is adjacent to one of the two ends of the electric motor 300 in the axial direction.

The thrust magnetic bearing 500 supports the thrust load of the rotating shaft 250 by electromagnetic force in a non-contact manner. The thrust magnetic bearing 500 includes a pair of electromagnets 510, and each is fixed to the inner surface of the casing 100. The two electromagnets 510 are arranged such that each is adjacent to one of the two ends in the axial direction of a disk-shaped collar 260 provided on the rotating shaft 250 with an axial center AX at its center. The collar 260 is formed of a magnetic material, and in the thrust magnetic bearing 500, the position of the rotating shaft 250 integral with the collar 260 is held in a non-contact manner by magnetic attraction force of the pair of electromagnets 510 to the collar 260.

The touchdown bearing 600 is provided so as to prevent contact between the rotating shaft 250 and the radial magnetic bearing 400, and between the collar 260 and the electromagnet 510 of the thrust magnetic bearing 500. The touchdown bearing 600 is formed around an angular ball bearing, for example.

### [Configuration of thrust magnetic bearing]

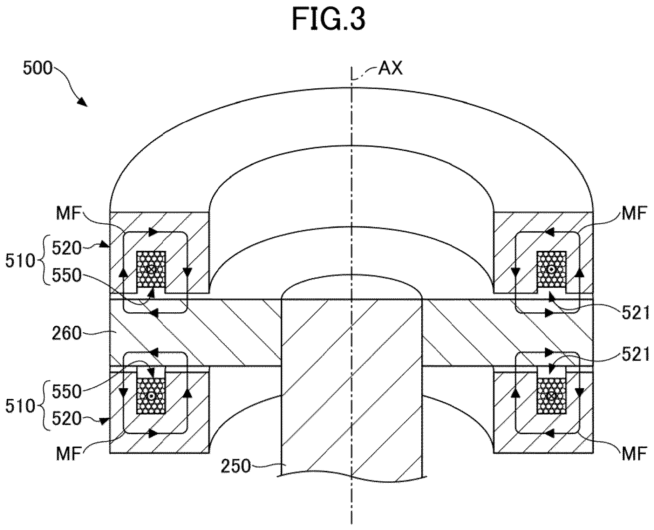

Next, the configuration of the thrust magnetic bearing 500 according to the present embodiment will be described with reference to FIG. 3.

FIG. 3 is a diagram illustrating an example of a configuration of the thrust magnetic bearing 500.

In FIG. 3, the illustration of the insulating member 540 described below is omitted for simplicity.

As illustrated in FIG. 3, the thrust magnetic bearing 500 includes two electromagnets 510, each arranged adjacent to one of the two ends in the axial direction of the collar 260 as described above. Hereinafter, because the electromagnet 510 has a symmetrical structure with respect to the collar 260, any one of the electromagnets 510 will be described with respect to the collar 260.

The electromagnet 510 includes a core 520 and a coil 550.

The core 520, together with the collar 260, functions as a magnetic path for a magnetic flux MF generated by the energized coil 550. The collar 260 and the core 520 are formed of soft magnetic materials such as, for example, silicon steel sheet, permalloy, ferrite, and carbon steel.

The core 520 has an annular shape centering on the axis AX of the rotating shaft 250 when viewed along the axial direction, and has a certain thickness in the axial direction. The core 520 has a rectangular cross-sectional shape in the cross section including the axis AX of the rotating shaft 250, and a groove portion 521 extending over the entire circumference in the circumferential direction is provided on the end face facing the collar 260 in the axial direction.

The groove portion 521 has an annular shape when viewed along the axial direction.

The coil 550 has an annular shape centering on the axis AX of the rotating shaft 250 when viewed along the axial direction, and is accommodated in the groove portion 521. The coil 550 is energized so as to generate the magnetic flux MF in the figure. Thus, the two electromagnets 510 mutually generate magnetic attraction to the collar 260, and can support the thrust load of the rotating shaft 250 integral with the collar 260 in a non-contact manner.

### [First example of electromagnet structure]

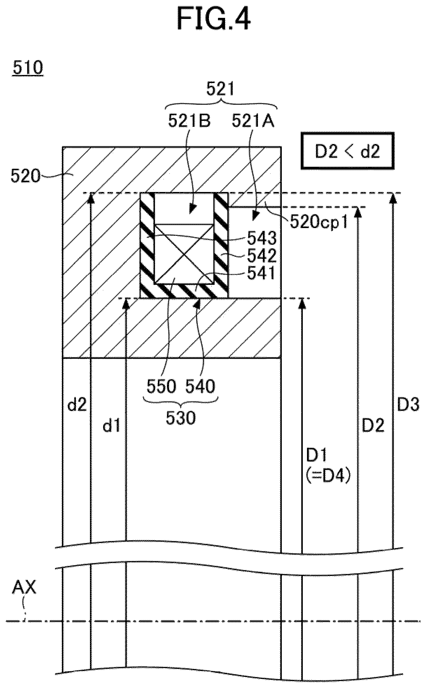

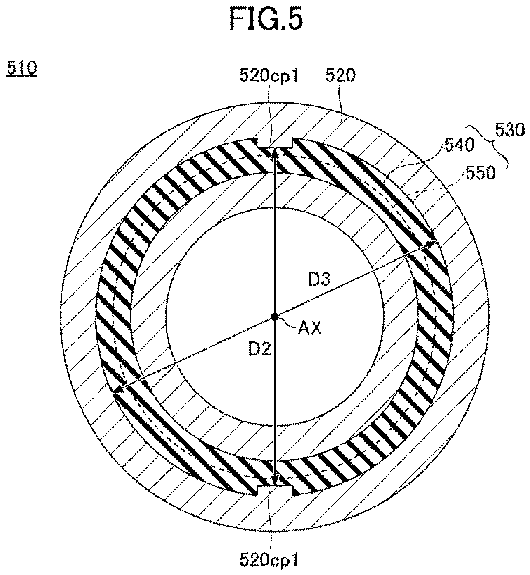

Next, a first example of the structure of the electromagnet 510 according to the present embodiment will be described with reference to FIGS. 4 and 5.

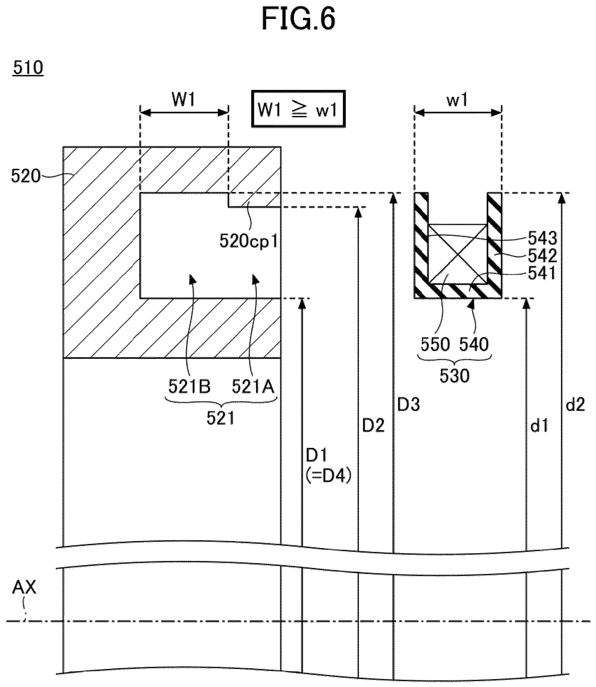

FIGS. 4 and 5 are diagrams illustrating a first example of the structure of the electromagnet 510. Specifically, FIG. 4 is a cross-sectional view of the electromagnet 510 according to the present embodiment in a plane including the axis AX of the rotating shaft 250. The same applies to the cross-sectional views of FIGS. 6 to 15, which will be described below. FIG. 5 is a diagram of the electromagnet 510 viewed in the axial direction from the opening 521A side of the groove portion 521 of the core 520.

As illustrated in FIG. 4, the electromagnet 510 includes a core 520 and a coil assembly 530.

The coil assembly 530 has an annular shape when viewed along the axis AX of the rotating shaft 250, and is accommodated in a housing portion 521B that is deeper than the opening 521A of the groove portion 521 of the core 520. The coil assembly 530 includes an insulating member 540 and a coil 550.

The insulating member 540 functions to secure part or all of the insulation between the coil 550 and the core 520. The insulating member 540 is formed of an electrically insulating material. For example, the insulating member 540 is made of resin. The resin used as the material of the insulating member 540 is, for example, polyether ether ketone (PEEK), liquid crystal polymer (LCP), polyphenylene sulfide (PPS), epoxy resin, and the like.

The insulating member 540 includes, in an integrally constituted manner, an inner peripheral portion 541 and axial end portions 542 and 543.

The inner peripheral portion 541 covers the radial inside of the coil 550. Specifically, the inner peripheral portion 541 has a cylindrical shape centered on the axial center AX of the rotating shaft 250. Thus, the insulating member 540 can secure insulation between the coil 550 and the radial inner side surface of the groove portion 521 of the core 520.

The axial end portion 542 covers one end of the opening 521A side of the groove portion 521 among the axial ends of the coil 550. The axial end portion 542 is formed in a flat plate shape so as to extend radially outward from one end on the opening 521A side of the groove portion 521, of the axial ends of the inner peripheral portion 541.

The axial end portion 543 covers the other end, on the side opposite to the opening 521A of the groove portion 521, of the axial ends of the coil 550. Specifically, the axial end portion 543 is formed so as to extend radially outward from the other end on the side opposite to the opening 521A of the groove portion 521, of the axial ends of the inner peripheral portion 541. Thus, the insulating member 540 can secure insulation between the coil 550 and the bottom surface of the groove portion 521 of the core 520 on the inner side in the axial direction.

The coil 550 is formed by winding a conductor around the inner peripheral portion 541 of the insulating member 540.

Each radial dimension of the axial end portions 542 and 543 is larger than the radial dimension of the coil 550. Thus, the insulating member 540 can provide a gap between the coil 550 and the radial outer side surface of the groove portion 521 of the core 520, thereby securing insulation between the coil 550 and the core 520 therebetween.

The inner diameter (an inner diameter D1) in the radial direction of the opening 521A in the groove portion 521 of the core 520 and the inner diameter (an inner diameter D4) in the radial direction of the housing portion 521B in the groove portion 521 of the core 520 are the same. Thus, the inner side surface of the groove portion 521 in the radial direction is formed to be flush from the opening of the groove portion 521 to the innermost portion.

In this example, the inner diameter D1 of the opening 521A and the inner diameter D4 of the housing portion 521B in the groove portion 521 of the core 520 are the same in the entire circumferential direction, that is, they do not change depending on the position in the circumferential direction.

On the other hand, the outer diameter (an outer diameter D2) in the radial direction of the opening 521A in the groove portion 521 of the core 520 is shorter than the outer diameter (an outer diameter D3) in the radial direction of the housing portion 521B in the groove portion 521 of the core 520. Thus, a protruding portion 520cp1 is provided at the portion corresponding to the opening 521A of the outer side surface of the groove portion 521 in the radial direction.

In this example, the outer diameter D2 of the opening 521A and the outer diameter D3 of the housing portion 521B in the groove portion 521 of the core 520 are the same in the entire circumferential direction, that is, they do not change depending on the position in the circumferential direction. However, the outer diameter D2 of the opening 521A in the groove portion 521 of the core 520 may vary in the circumferential direction. That is, the protruding amount of the protruding portion 520cp1 may vary in the circumferential direction.

The radial inner diameter (an inner diameter d1) of the coil assembly 530 is appropriately set such that the coil assembly 530 can be accommodated in the housing portion 521B, in relation to the radial inner side diameter (an inner diameter D4) of the housing portion 521B in the groove portion 521 of the core 520. Similarly, the radial outer diameter (an outer diameter d2) of the coil assembly 530 is appropriately set such that the coil assembly 530 can be accommodated in the housing portion 521B, in relation to the outer diameter D3 of the housing portion 521B in the groove portion 521 of the coil 550.

In this example, the inner diameter d1 of the coil assembly 530 corresponds to the radial inner diameter of the insulating member 540, and the outer diameter d2 of the coil assembly 530 corresponds to the radial outer diameter of the insulating member 540. The inner diameter d1 and the outer diameter d2 of the coil assembly are the same in the entire circumferential direction, that is, they do not change depending on the position in the circumferential direction.

The axial width w1 of the coil assembly 530 is appropriately set such that the coil assembly 530 can be accommodated in the housing portion 521B in relation to the axial width W1 of the housing portion 521B.

The axial width w1 in the axial direction of the coil assembly 530 corresponds to the axial dimension of the insulating member 540, specifically, the distance between the respective axial end faces of the axial end portions 542 and 543. The axial width W1 of the housing portion 521B corresponds to the axial distance from the bottom surface of the groove portion 521 to the protruding portion 520cp1. In this example, the axial width w1 of the coil assembly 530 and the axial width W1 of the housing portion 521B are the same in the entire circumferential direction, that is, they do not change depending on the position in the circumferential direction.

The outer diameter D2 of the opening 521A in the groove portion 521 of the core 520 is shorter than the outer diameter d2 of the coil assembly 530 accommodated in the housing portion 521B. Consequently, the radial outer tip portion of the axial end portion 543 of the insulating member 540 and the protruding portion 520cp1 overlap in the radial direction. Therefore, the radial outer tip portion of the axial end portion 543 of the insulating member 540 is restricted from moving in the axial direction by the protruding portion 520cp1. Therefore, the core 520 can hold, in the groove portion 521, the coil assembly 530 accommodated in the housing portion 521B, by the function of the protruding portion 520cp1.

For example, when the coil assembly 530 is fixed to the groove portion 521 of the core 520 by using an adhesive or resin potting, etc., the adhesive or resin for potting may deteriorate due to the use atmosphere (for example, the refrigerant, etc.), and the proper fixing state might not be maintained. Further, when the adhesive or resin potting is used, problems still exist in the control of the amount of adhesive applied and the control of internal defects after curing of the resin potting, etc., and it may become difficult to ensure stable quality.

Further, when the insulating member 540 is fixed to the core 520 by bolts or the like, for example, the axial force of the bolt continues to act on the resin insulating member 540, which may cause creep fracture and the proper fixing state might not be maintained.

Further, when the coil assembly 530 is mechanically connected to the core 520 by providing the insulating member 540 with a snap-fit structure and a groove or the like opposite to the core 520, for example, there is a concern about a large increase in costs due to the molding die of the insulating member and the processing method of the core 520.

Further, the thrust magnetic bearing 500 inside the compressor 10 may be exposed to a very large temperature change. Therefore, in the case of the fixing method using the adhesive or resin potting described above, the difference in the thermal expansion coefficient between the metal core 520 and the resin insulating member 540 may cause damage to the adhesive, the resin for potting, and the insulating member 540 such as deterioration, cracking, and creep fracture.

On the other hand, in this example, the electromagnet 510 can properly hold the coil assembly 530 in the groove portion 521 in a form that does not appreciably cause damage or deterioration of the insulating member 540 during use.

For example, the protruding portion 520cp1 of the core 520 is provided over the entire circumferential direction, that is, the entire circumference. Thus, the electromagnet 510 can reliably hold the coil assembly 530 in the groove portion 521. As illustrated in FIG. 5, the protruding portion 520cp1 of the core 520 may be provided at a part of the circumferential direction. In this example (FIG. 5), the protruding portion 520cp1 is provided at two locations at an interval of 180 degrees in the circumferential direction. Thus, the volume of the protruding portion 520cp1 can be reduced, and as a result, the cost of the core 520 can be reduced.

The outer diameter d2 of the coil assembly 530 and the outer diameter D2 of the opening 521A in the groove portion 521 of the core 520 are appropriately set such that the coil assembly 530 can pass through the opening 521A and be accommodated in the housing portion 521B while allowing temporary elastic deformation of the insulating member 540, for example.

### [Second example of electromagnet structure]

Next, a second example of the structure of the electromagnet 510 according to the present embodiment will be described with reference to FIG. 6.

In this example, the same reference numerals are assigned to the same or corresponding structures as in the first example (FIG. 4) described above, and the parts that are different from the first example described above will be described mainly, and descriptions of the same or corresponding parts as in the first example described above may be omitted. Hereinafter, the same correspondence will be applied to the descriptions of the third to twelfth examples described below in relation to the already described examples.

FIG. 6 is a diagram illustrating a second example of the structure of the electromagnet 510.

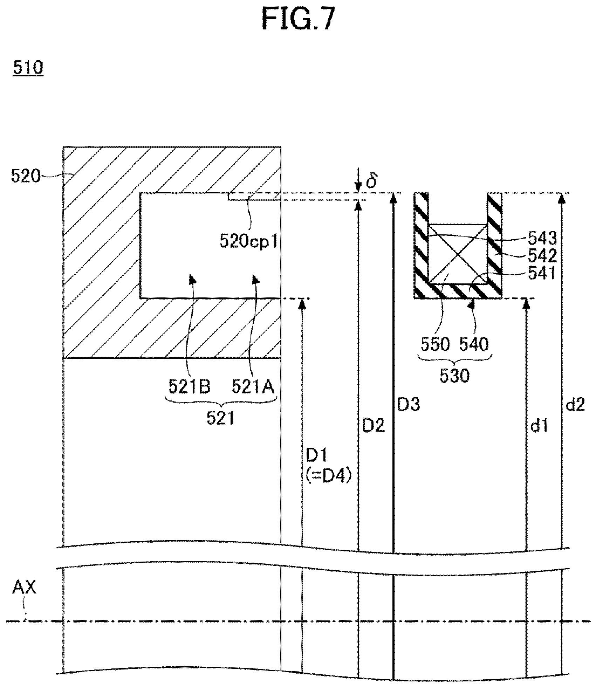

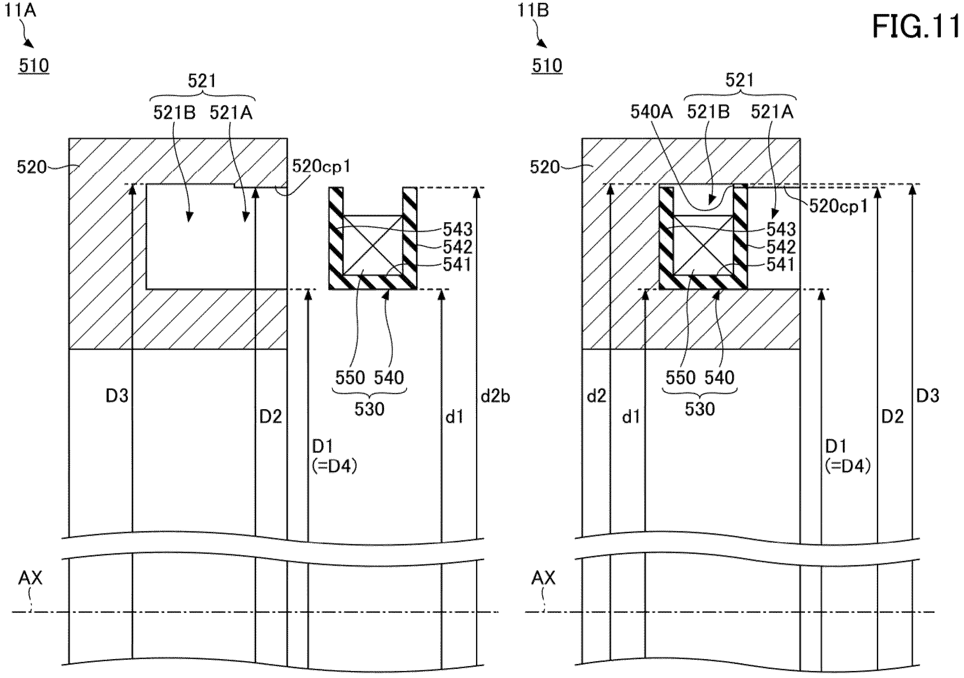

For convenience of explanation, FIG. 6 illustrates an exploded sectional view illustrating a state before assembly in which the coil assembly 530 and the core 520 are arranged axially shifted. Hereinafter, the same applies to FIGS. 7 and 11A.

As illustrated in FIG. 6, the electromagnet 510 according to this example differs from the first example described above in that the relationship between the axial width w1 of the coil assembly 530 and the axial width W1 of the housing portion 521B in the groove portion 521 of the core 520 is identified, and may be the same as the first example described above in other respects.

In this example, the axial width W1 of the housing portion 521B is set to be greater than or equal to the axial dimension of the portion of the coil assembly 530 that overlaps the protruding portion 520cp1 in the radial direction. The portion of the coil assembly 530 that overlaps the protruding portion 520cp1 in the radial direction is the radial outer tip portion of the axial end portions 542 and 543. In this example, the axial dimension of the portion of the coil assembly 530 that overlaps the protruding portion 520cp1 in the radial direction, is equal to the axial width w1 of the coil assembly 530. Therefore, in this example, the axial width W1 of the housing portion 521B is set to be greater than or equal to the axial width w1 of the coil assembly 530. Thus, the axial force from the core 520 does not appreciably act on the insulating member 540 of the coil assembly 530 accommodated in the housing portion 521B. Therefore, the electromagnet 510 can hold the coil assembly 530 in the housing portion 521B in the groove portion 521 of the core 520 while suppressing deterioration and damage of the insulating member 540.

For example, the above-described relationship between the axial width W1 of the housing portion 521B and the axial dimension of the portion of the coil assembly 530 that overlaps the protruding portion 520cp1 in the radial direction is established over the entire circumferential direction, that is, the entire circumference. Thus, the electromagnet 510 can reliably reduce deterioration or damage of the insulating member 540. Further, the above-described relationship between the axial width W1 of the housing portion 521B and the axial dimension of the portion of the coil assembly 530 that overlaps the protruding portion 520cp1 in the radial direction may be established in a part of the circumferential direction. Thus, the electromagnet 510 can achieve a balance between reduction of deterioration or damage of the insulating member and the holding property of the coil assembly 530 in the groove portion 521.

Further, the electromagnet 510 according to this example differs from the above-described example 1 in that the relationship between the coil assembly 530 and the housing portion 521B not only in terms of the axial dimension but also in terms of the radial dimension is identified, and may be the same as the above-described example 1 in other respects.

Specifically, the outer diameter D3 of the housing portion 521B in the groove portion 521 of the core 520 may be set to be greater than or equal to the outer diameter d2 of the coil assembly 530. Further, the inner diameter D4 of the housing portion 521B in the groove portion 521 of the core 520 may be set to be less than or equal to the inner diameter d1 of the coil assembly 530. This makes it difficult for the radial force from the core 520 to act on the insulating member 540 of the coil assembly 530 accommodated in the housing portion 521B. Therefore, the electromagnet 510 can hold the coil assembly 530 in the groove portion 521 of the core 520 while reducing deterioration and damage of the insulating member 540.

For example, the above-described relationship between the outer diameter D3 of the housing portion 521B and the axial dimension of the portion of the coil assembly 530 that overlaps the protruding portion 520cp1 in the radial direction, is established over the entire circumferential direction, that is, the entire circumference. Thus, the electromagnet 510 can reliably reduce deterioration and damage of the insulating member 540. Further, the above-described relationship between the outer diameter D3 of the housing portion 521B and the axial dimension of the portion of the coil assembly 530 that overlaps the protruding portion 520cp1 in the radial direction may be established only in a part of the circumferential direction. Thus, the balance between the reduction of deterioration and damage of the insulating member 540 of the electromagnet 510 and the holding property of the coil assembly 530 in the groove portion 521 can be achieved.

### [Third example of electromagnet structure]

Next, a third example of the structure of the electromagnet 510 according to the present embodiment will be described with reference to FIG. 7.

FIG. 7 is a diagram illustrating a third example of the structure of the electromagnet 510.

As illustrated in FIG. 7, the electromagnet 510 according to this example differs from that of the first and second examples described above in that the relationship between the outer diameter D2 of the opening 521A in the groove portion 521 of the core 520 and the outer diameter d2 of the coil assembly 530 is identified, and may be the same as in the first and second examples described above in other respects.

In this example, a difference δ between the outer diameter D2 of the opening 521A in the groove portion 521 of the core 520 and the outer diameter d2 of the coil assembly 530 is set to 1% (percent) or less of the outer diameter d2 of the coil assembly 530. Thus, an operator or a manufacturing apparatus (hereinafter, "operator or the like") can pass the coil assembly 530 through the opening 521A of the groove portion 521 and store it in the housing portion 521B by, for example, light press-fitting. Therefore, the operator or the like can manufacture the electromagnet 510 relatively easily.

For example, the above condition of the difference δ is established over the entire circumferential direction, that is, the entire circumference. Thus, the assemblability of the electromagnet 510 can be reliably improved. Further, the above condition of the difference δ may be established only in a part of the circumferential direction. Thus, a balance can be achieved between the assemblability of the electromagnet 510 and the holding property of the coil assembly 530 in the groove portion 521.

### [Fourth example of electromagnet structure]

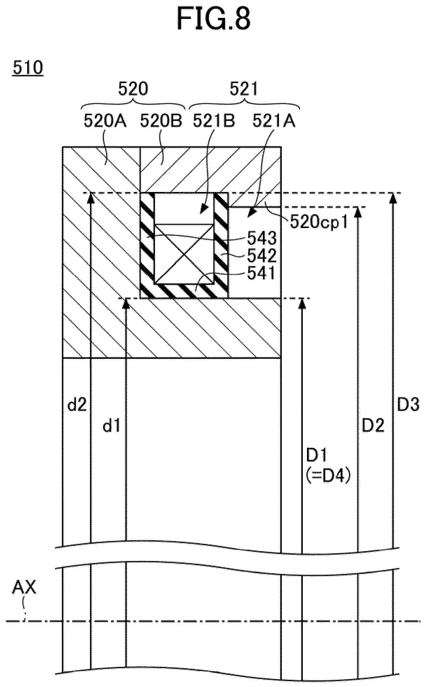

Next, a fourth example of the structure of the electromagnet 510 according to the present embodiment will be described with reference to FIG. 8.

FIG. 8 is a diagram illustrating a fourth example of the structure of the electromagnet 510.

As illustrated in FIG. 8, the electromagnet 510 according to the present embodiment differs from that of the above-described first to third examples in that the core 520 includes separate core portions 520A and 520B, and may be the same as in the above-described first or second example in other respects.

The core 520 includes the core portions 520A and 520B as described above.

The core portion 520A is an integral member corresponding to the inner portion in the radial direction of the core 520, with the groove portion 521 as a reference and the portion opposite to the opening 521A in the axial direction, with the groove portion 521 as a reference. The core portion 520B is an integral member corresponding to the outer portion in the radial direction of the core 520, with the groove portion 521 as a reference.

The core 520 is provided with the protruding portion 520cp1, similar to that of the first to third examples described above.

For example, the electromagnet 510 is assembled such that the coil assembly 530 is accommodated in the housing portion 521B, and sandwiched between the core portions 520A and 520B, and then the core portions 520A and 520B are integrally bonded by known methods such as bonding, caulking, and fitting. Thus, it is not necessary for an operator or the like to assemble the coil assembly 530 so as to be inserted through the opening 521A in the groove portion 521 of the core 520, and the electromagnet 510 can be manufactured relatively easily.

### [Fifth example of electromagnet structure]

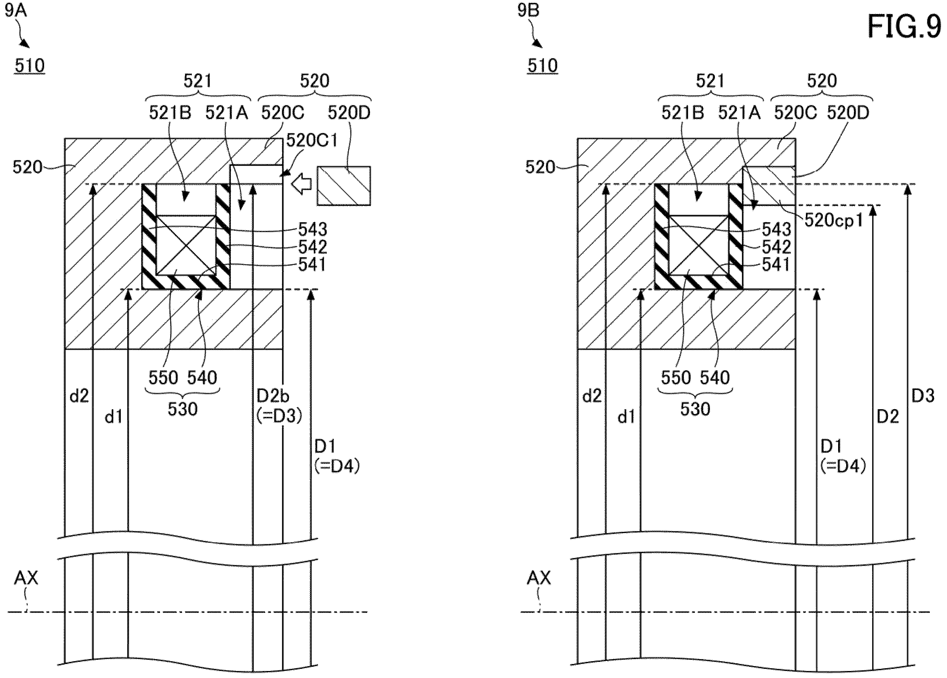

Next, a fifth example of the structure of the electromagnet 510 according to the present embodiment will be described with reference to FIG. 9.

FIG. 9 is a diagram illustrating a fifth example of the structure of the electromagnet 510. FIG. 9 includes FIGS. 9A and 9B.

FIG. 9A is a diagram illustrating the state before the assembly of the core portion 520D in the electromagnet 510 according to the present example, and FIG. 9B is a diagram illustrating the state after the assembly of the core portion 520D in the electromagnet 510 according to the present example.

As illustrated in FIG. 9, the electromagnet 510 according to the present example differs from that of the above-described first to fourth examples in that the core 520 includes separate core portions 520C and 520D, and may be the same as in any one of the above-described first or second example in other respects.

The core portion 520C is a main core member of the core 520. The core portion 520C is an integral member corresponding to the inner portion in the radial direction of the core 520, the portion opposite to the opening 521A in the axial direction, and the outer portion in the radial direction, with the groove portion 521 as a reference. In the core portion 520C, a concave portion 520C1 is formed at the end of the outer portion in the radial direction on the opening 521A side, with the groove portion 521 as a reference.

The core portion 520D is an auxiliary core member, and is attached by being inserted into the concave portion 520C1 of the core portion 520C, so as to function as the protruding portion 520cp1 of the core 520. The core portion 520D is preferably formed of a soft magnetic material so as not to inhibit the magnetic path of the magnetic flux MF of the coil 550. For example, the core portion 520D is formed of the same kind of soft magnetic material as the core portion 520C.

After the core portion 520D is assembled to the core portion 520C, the core portion 520D is suitably fixed to the core portion 520C by a predetermined method. For example, the core portion 520D is fixed to the core portion 520C by driving or screwing a fixing member. When the core portion 520D is attached to the core portion 520C, its axial end face (that is, the surface facing the collar 260) is preferably flush with the axial end face of the core portion 520C.

In this example, the outer diameter D2b of the opening 521A in the single groove portion 521 of the core portion 520C is the same as the outer diameter D3 of the housing portion 521B in the groove portion 521. Thus, an operator or the like can relatively easily insert the coil assembly 530 from the opening 521A in the groove portion 521 of the core portion 520C in a state before the core portion 520D is attached to the core portion 520C. Therefore, an operator or the like can relatively easily manufacture the electromagnet 510 by attaching the core portion 520D to the core portion 520C after accommodating the coil assembly 530 in the groove portion 521 of the core portion 520C. Thus, the electromagnet 510 can be relatively easily manufactured while securing the holding property of the coil assembly 530 by the function of the protruding portion 520cp1.

For example, the core portion 520D is provided in the entire circumferential direction with respect to the core portion 520C, that is, in the entire circumferential range. Thus, the coil assembly 530 can be securely held in the groove portion 521 of the core 520. Further, the core portion 520D may be provided only in a part of the circumferential direction with respect to the core portion 520C. As a result, it is possible to balance the holding property of the core 520 of the coil assembly 530 in the groove portion 521 and the cost reduction by the adoption of the core portion 520D.

### [Sixth example of electromagnet structure]

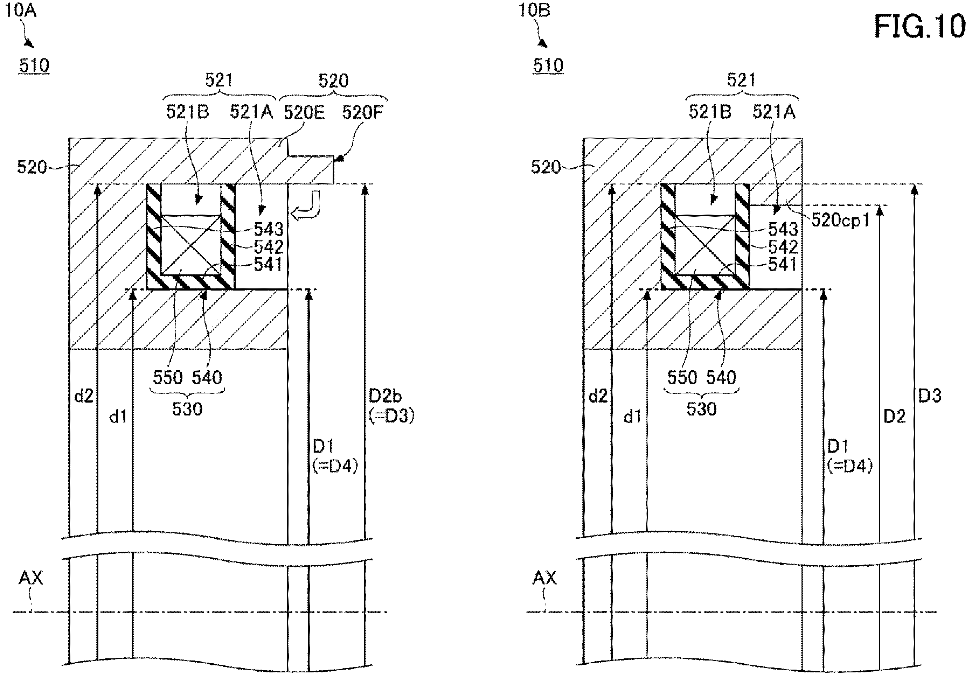

Next, a sixth example of the structure of the electromagnet 510 according to the present embodiment will be described with reference to FIG. 10.

FIG. 10 is a diagram illustrating a sixth example of the structure of the electromagnet 510. FIG. 10 includes FIGS. 10A and 10B.

FIG. 10A is a diagram illustrating the state before processing of the protruding portion 520F of the electromagnet 510 according to the present example, and FIG. 10B is a diagram illustrating the state after processing of the protruding portion 520F of the electromagnet 510 according to the present example.

As illustrated in FIG. 10, the electromagnet 510 according to this example differs from that of the above-described first to fifth examples in that it includes a core portion 520E and a protruding portion 520F integrally formed in the core 520, and may be the same as in the above-described first or second example in other respects.

As illustrated in FIG. 10A, the core portion 520E is the main body portion of the core 520, and corresponds to the inner portion in the radial direction of the core 520, the portion axially opposite to the opening 521A, and the outer portion in the radial direction, with the groove portion 521 as a reference.

The protruding portion 520F is integrally formed so as to extend axially from the tip of the outer portion in the radial direction of the core portion 520E, with the groove portion 521 as a reference. The protruding portion 520F is formed so as to be processed by known plastic deformation (for example, bending, etc.). Thus, as illustrated in FIGS. 10A and 10B, by processing the protruding portion 520F so as to be plastically deformed toward the groove portion 521 side (see the blank arrow in FIG. 10A), the shape can be changed to function as the protruding portion 520cp1.

As illustrated in FIG. 10A, in this example, in the state before processing the protruding portion 520F, the outer diameter D2b of the opening 521A in the groove portion 521 of the core 520 is equal to the outer diameter D3 of the housing portion 521B. Thus, in the state before processing the protruding portion 520F, the coil assembly 530 can be relatively easily inserted into the housing portion 521B from the opening 521A in the groove portion 521 of the core 520. Therefore, the electromagnet 510 can be manufactured relatively easily by processing the protruding portion 520F of the core 520 after the coil assembly 530 is accommodated in the groove portion 521 of the core 520 before processing the protruding portion 520F. Therefore, the electromagnet 510 can be manufactured relatively easily while implementing the attachment of the coil assembly 530 to the core 520 by the function of the protruding portion 520cp1.

For example, the protruding portion 520F is provided in the entire circumferential direction with respect to the core 520, that is, in the entire circumferential range. Thus, the coil assembly 530 can be securely held in the groove portion 521 of the core 520. Further, the protruding portion 520F may be provided only in a part of the circumferential direction with respect to the core 520. Thus, a balance can be achieved between the holding property of the coil assembly 530 in the groove portion 521 of the core 520 and the cost reduction by adopting the protruding portion 520F.

### [Seventh example of electromagnet structure]

Next, a seventh example of the structure of the electromagnet 510 according to the present embodiment will be described with reference to FIG. 11.

FIG. 11 is a diagram illustrating a seventh example of the structure of the electromagnet 510. FIG. 11 includes FIGS. 11A and 11B.

FIG. 11A is a diagram illustrating a state before the coil assembly 530 of the electromagnet 510 according to this example is assembled to the core 520, and FIG. 11B is a diagram illustrating a state after the coil assembly 530 of the electromagnet 510 according to this example is assembled to the core 520. FIG. 11A illustrates an insulating member 540 in a state before the deformation portion 540A is deformed.

As illustrated in FIG. 11, the electromagnet 510 according to this example differs from the above-described electromagnet of the first to sixth examples in that the insulating member 540 has a deformation portion 540A.

In this example, the structure of the core 520 may be similar to that of the above-described first to third examples.

As illustrated in FIG. 11A, in the state before deformation of the deformation portion 540A, the outer diameter d2b of the insulating member 540 is set to be less than or equal to the outer diameter D2 of the opening 521A in the groove portion 521 of the core 520. Thus, in the state before deformation of the deformation portion 540A, the coil assembly 530 can be relatively easily inserted from the opening 521A into the housing portion 521B.

As illustrated in FIG. 11B, after insertion of the coil assembly 530 into the housing portion 521B in the groove portion 521 of the core 520, the deformation portion 540A is deformed. Thus, the deformation portion 540A is fixed in a state of protruding outward from the radial tip of the axial end portion 542 of the insulating member 540, and as a result, the outer diameter d2 of the insulating member 540 can be implemented to be longer than the outer diameter D2 of the opening 521A in the groove portion 521 of the core 520. Therefore, the electromagnet 510 can be relatively easily manufactured while implementing attachment of the coil assembly 530 to the core 520 by the function of the protruding portion 520cp1.

For example, the deformation portion 540A is provided only in a part in the circumferential direction with respect to the insulating member 540. Thus, a balance can be achieved between the holding property in the groove portion 521 of the core 520 of the coil assembly 530 and the cost reduction by the adoption of the deformation portion 540A. Further, the deformation portion 540A may be provided in the entire circumferential direction, that is, in a range extending over the entire circumference of the insulating member 540. Thus, the coil assembly 530 can be securely held in the groove portion 521 of the core 520.

### [Eighth example of electromagnet structure]

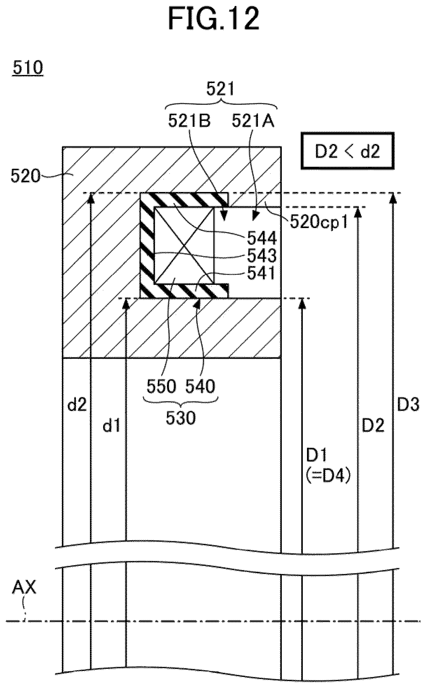

Next, an eighth example of the structure of the electromagnet 510 according to the present embodiment will be described with reference to FIG. 12.

FIG. 12 is a diagram illustrating an eighth example of the structure of the electromagnet 510.

As illustrated in FIG. 12, the structure of the insulating member 540 of the electromagnet 510 according to the present example is different from the above-described first to seventh examples, and may be the same as any one of the above-described first to third examples in other respects.

For example, as illustrated in FIG. 12, the core 520 has the same structure as that of any one of the above-described first to third examples. In this example, instead of the structure similar to any one of the above-described first to third examples, the structure of the core 520 of any one of the above-described fourth to sixth examples may be adopted.

The insulating member 540 includes an inner peripheral portion 541, an axial end portion 543, and an outer peripheral portion 544.

The outer peripheral portion 544 covers the radial outside of the coil 550. Specifically, the outer peripheral portion 544 has a cylindrical shape centered on the axial center AX of the rotating shaft 250. Thus, the insulating member 540 can secure insulation between the coil 550 and the radial outside side surface of the groove portion 521 of the core 520.

The axial end portion 543 connects one end of the inner peripheral portion 541 to one end of the outer peripheral portion 544, the one end being the end in the axial direction opposite to the opening 521A.

In this example, the outer diameter d2 of the insulating member 540 corresponds to the outer diameter of the outer peripheral surface of the outer peripheral portion 544, and is longer than the outer diameter D2 of the opening 521A in the groove portion 521 of the core 520, as in the first to seventh examples described above. Thus, as in the first to seventh examples described above, the electromagnet 510 can appropriately hold the coil assembly 530 in the housing portion 521B of the groove portion 521 in a form in which the insulating member 540 during use is unlikely to be damaged or deteriorated.

In this example, on the premise that the inner peripheral portion 541, the axial end portion 543, and the outer peripheral portion 544 are integrally formed, the structure of the insulating member 540 of the seventh example described above, that is, the deformation portion 540A, may be adopted. In this case, the deformation portion 540A is provided in the outer peripheral portion 544, for example.

### [Ninth example of electromagnet structure]

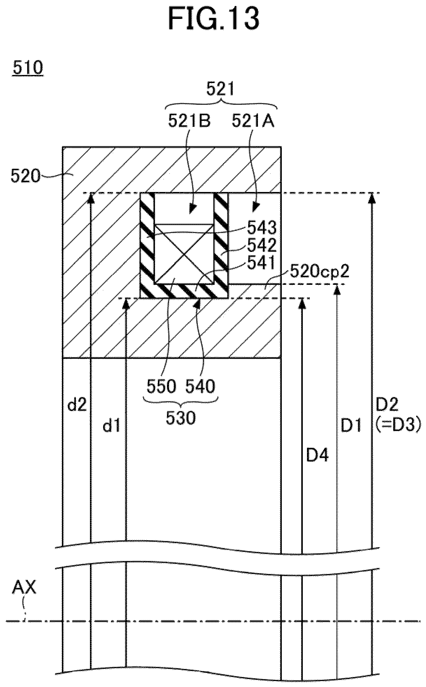

Next, a ninth example of the structure of the electromagnet 510 according to the present embodiment will be described with reference to FIG. 13.

FIG. 13 is a diagram illustrating a ninth example of the structure of the electromagnet 510.

As illustrated in FIG. 13, the present example is different from the above-described first to eighth examples in that the protruding portion 520cp1 of the core 520 is omitted, and the protruding portion 520cp2 is added instead.

The outer diameter D2 of the opening 521A in the groove portion 521 of the core 520 and the outer diameter D3 of the housing portion 521B in the groove portion 521 of the core 520 are the same. Thus, the radially outer side surface of the groove portion 521 is formed to be flush from the opening of the groove portion 521 to the innermost portion.

On the other hand, the inner diameter D1 of the opening 521A in the groove portion 521 of the core 520 is larger than the inner diameter D4 of the housing portion 521B in the groove portion 521 of the core 520. Thus, the protruding portion 520cp2 is provided at the portion corresponding to the opening 521A on the radially inner side surface of the groove portion 521.

In this example, the inner diameter D1 of the opening 521A in the groove portion 521 of the core 520 and the inner diameter D4 of the housing portion 521B are the same in the entire circumferential direction, that is, they do not change depending on the position in the circumferential direction. However, the inner diameter D1 of the opening 521A in the groove portion 521 of the core 520 may change in the circumferential direction. That is, the protruding amount of the protruding portion 520cp2 may change in the circumferential direction.

The insulating member 540 has the same structure as in the first to sixth examples described above.

The inner diameter D1 of the opening 521A in the groove portion 521 of the core 520 is longer than the inner diameter d1 of the coil assembly 530 accommodated in the housing portion 521B. Thus, the inner peripheral portion 541 and the protruding portion 520cp2 of the insulating member 540 overlap in the radial direction. Therefore, the axial movement of the inner peripheral portion 541 of the insulating member 540 is restricted by the protruding portion 520cp2. So therefore, the core 520 can appropriately hold the coil assembly 530 in the groove portion 521 in a form that is unlikely to cause damage or deterioration of the insulating member 540 during use by the function of the protruding portion 520cp2.

For example, the protruding portion 520cp2 of the core 520 is provided over the entire circumferential direction, that is, the entire circumference. Thus, the electromagnet 510 can securely hold the coil assembly 530 in the groove portion 521. Further, the protruding portion 520cp2 of the core 520 may be provided in a part of the circumferential direction. Thus, the volume of the protruding portion 520cp2 can be reduced, and consequently, the cost of the core 520 can be reduced.

### [Tenth example of electromagnet structure]

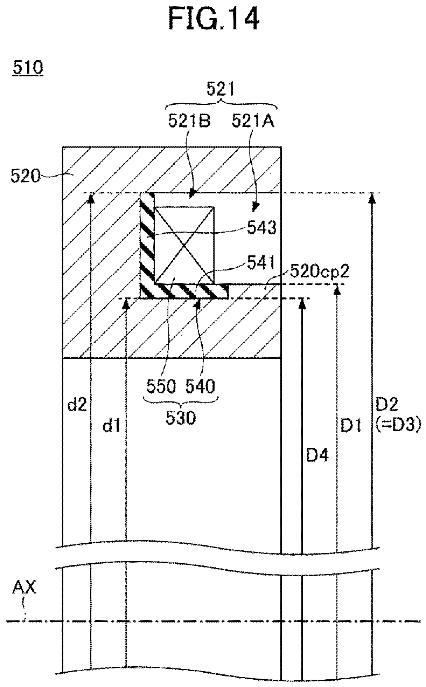

Next, a tenth example of the structure of the electromagnet 510 according to the present embodiment will be described with reference to FIG. 14.

FIG. 14 is a diagram illustrating a tenth example of the electromagnet 510.

As illustrated in FIG. 14, the structure of the insulating member 540 of the electromagnet 510 according to this example is different from the above-described first to ninth examples, and may be the same as the above-described ninth example in other respects.

The core 520 has the same structure as that of the above-described ninth example.

The insulating member 540 includes an inner peripheral portion 541 and an axial end portion 543. That is, in this example, unlike the above-described the ninth example, the axial end portion 542 of the insulating member 540 is omitted.

One end of the inner peripheral portion 541 on the axial side of the opening 521A protrudes more toward the opening 521A than one end of the coil 550 on the axial side of the opening 521A. Thus, even if the axial end portion 542 is omitted, insulation between the protruding portion 520cp2 of the core 520 and the coil 550 can be ensured.

### [Eleventh example of electromagnet structure]

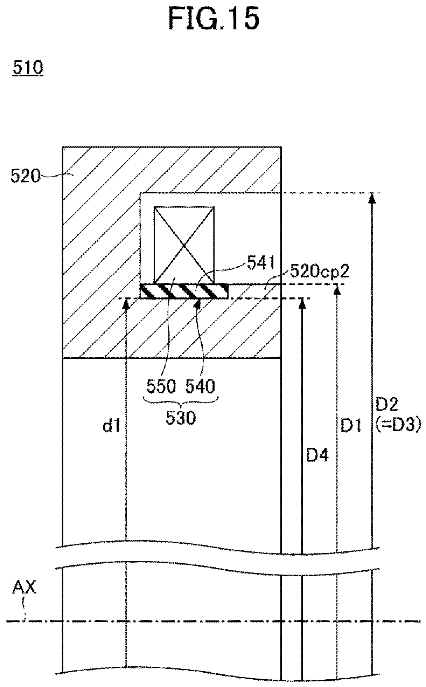

Next, the eleventh example of the structure of the electromagnet 510 according to the present embodiment will be described with reference to FIG. 15.

FIG. 15 is a diagram illustrating the eleventh example of the electromagnet 510.

As illustrated in FIG. 15, the structure of the insulating member 540 of the electromagnet 510 according to the present embodiment is different from the above-described first to tenth examples, and may be the same as the above-described ninth example in other respects.

The core 520 has the same structure as that of the above-described ninth example.

The insulating member 540 includes an inner peripheral portion 541. That is, in this example, the axial end portions 542 and 543 are omitted in the insulating member 540, unlike in the ninth example.

Both axial ends of the inner peripheral portion 541 protrude outward from both axial ends of the coil 550. Thus, insulation with the core 520 at both axial ends of the coil 550 can be secured.

Further, a gap exists between the radially outer end portion of the coil 550 and the radially outer side surface of the groove portion 521 of the core 520. Thus, insulation with the core 520 at the radially outer side of the coil 550 can be secured.

### [Other examples of electromagnet structure]

Next, other examples of the electromagnet 510 will be described.

The first to eleventh examples of the structure of the electromagnet 510 described above may be modified or changed as appropriate. Hereinafter, for convenience, examples in which modifications or changes have been made are referred to as "modified examples".

### <First modified example>

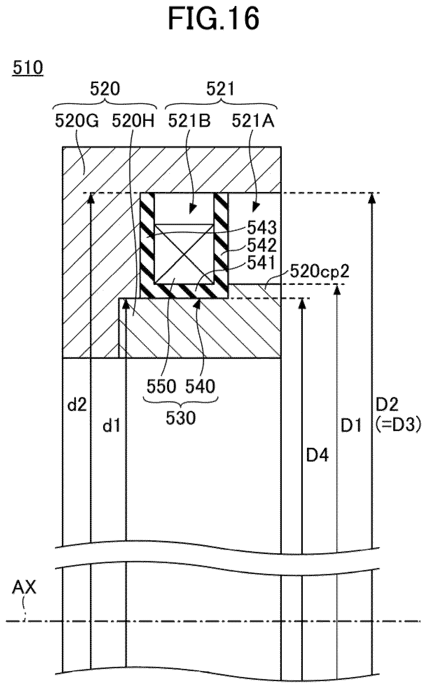

In the fourth example of the electromagnet 510 described above, the core 520 is divided into two core portions 520A and 520B before manufacturing the electromagnet 510, but may be divided into three or more cores. Further, the divided form of the core 520 illustrated in FIG. 8 described above is an example, and the core 520 may be divided into any form in consideration of ease of manufacturing and assemblability. For example, the core 520 may be divided in the same form as the core portions 520G and 520H illustrated in FIG. 16 described later.

### <Second modified example>

In any of the ninth to eleventh examples of the structure of the electromagnet 510 described above, the technical concept corresponding to the second example described above (FIG. 6) may be adopted. In this case, in this modified example, the dimension is set to be greater than or equal to the axial dimension of the portion of the coil assembly 530 that overlaps the protruding portion 520cp2 in the radial direction (in this example, the inner peripheral portion 541 of the insulating member 540). In this modified example, the axial width W1 of the housing portion 521B corresponds to the distance from the bottom surface of the groove portion 521 to the protruding portion 520cp2. In this modified example, the axial dimension of the portion of the coil assembly 530 that overlaps the protruding portion 520cp1 in the radial direction, that is, the axial end portions 542 and 543 of the insulating member 540, is equal to the axial width w1 of the coil assembly 530. Therefore, in this modified example, the axial width W1 of the housing portion 521B is set to be greater than or equal to the axial width w1 of the coil assembly 530. Thus, the same function and effect as in the above-described second example are achieved. In this modified example, as in the above-described second example, the above-described relationship between the axial width W1 of the housing portion 521B and the axial dimension of the portion of the coil assembly 530 that overlaps the protruding portion 520cp2 in the radial direction may be established over the entire circumferential direction, that is, over the entire circumference, or it may be established only in a part of the circumferential direction.

### <Third modified example>

In any of the ninth to eleventh examples and the second modified example of the structure of the electromagnet 510, the technical concept corresponding to the third example (FIG. 7) may be adopted. In this modified example, the difference δ between the inner diameter D1 of the opening 521A in the groove portion 521 of the core 520 and the inner diameter d1 of the coil assembly 530, is set to be 1% or less of the inner diameter d1 of the coil assembly 530. Thus, the same function and effect as in the third example can be achieved. In this modified example, as in the third example, the condition of the difference δ may be satisfied over the entire circumferential direction, that is, the entire circumference, or it may be satisfied only in a part of the circumferential direction.

### <Fourth modified example>

In any of the ninth to eleventh examples and the second modified example of the structure of the electromagnet 510 described above, the core 520 may be divided into two or more cores at a stage before manufacturing the electromagnet 510, as in the fourth example and the first modified example.

For example, FIG. 16 illustrates a fourth modified example of the structure of the electromagnet 510.

The core 520 includes separate core portions 520G and 520H.

The core portion 520G is an integral member corresponding to the outer portion in the radial direction of the core 520 and the portion opposite to the opening 521A in the axial direction, with the groove portion 521 as a reference. The core portion 520H is an integral member corresponding to the inner portion in the radial direction of the core 520, with the groove portion 521 as a reference.

In this manner, the core 520 may be divided into two core portions 520G and 520H at a stage prior to the manufacture of the electromagnet 510. Further, the core 520 may be divided in the same form as illustrated in FIG. 8 at a stage prior to the manufacture of the electromagnet 510.

### <Fifth modified example>

In any of the ninth to eleventh examples and the second modified example of the structure of the electromagnet 510 described above, the same technical concept as in the fifth example described above may be adopted. In this case, in this modified example, a concave portion is formed at the end on the opening 521A side of the inner portion in the radial direction of the main core within the core 520, with the groove portion 521 as a reference, and an auxiliary core functioning as the protruding portion 520cp2 within the core 520 is attached by being inserted into the concave portion.

### <Sixth modified example>

In any of the ninth to eleventh examples and the second modified example of the structure of the electromagnet 510 described above, the same technical concept as in the sixth example may be adopted. In this case, in this modified example, a protruding portion functioning as the protruding portion 520cp2 is formed by plastic deformation, at the end of the inner portion in the radial direction of the core 520 on the opening 521A side, with the groove portion 521 as a reference.

### <Seventh modified example>

In any of the ninth to eleventh examples and the second modified example of the structure of the electromagnet 510 described above, the same technical concept as in the seventh example may be adopted. In this case, in this modified example, a deformation portion is formed in the inner peripheral portion 541 of the insulating member 540, and the inner diameter d1b of the insulating member 540, that is, the inner diameter of the inner peripheral portion 541 is set greater than or equal to the inner diameter D1 of the opening 521A in the groove portion 521 of the core 520 in the state before deformation of the deformation portion. Then, after the coil assembly 530 is inserted into the housing portion 521B in the groove portion 521 of the core 520, the deformation portion is deformed. As a result, the coil assembly 530 is fixed in a state in which the deformation portion protrudes inward in the radial direction of the inner peripheral portion 541 of the insulating member 540, and as a result, the state in which the inner diameter d1 of the insulating member 540 is shorter than the inner diameter D1 of the opening 521A in the groove portion 521 of the core 520, can be implemented.

### <Eighth modified example>

In any of the ninth to eleventh examples and second to seventh modified examples of the structure of the electromagnet 510 described above, the structure of the insulating member 540 may be changed to a structure of the insulating member 540 similar to that of the eighth example described above, that is, a structure including the inner peripheral portion 541, the axial end portion 543, and the outer peripheral portion 544.

### [Other embodiments]

Next, other embodiments will be described.

The above embodiments may be modified or changed as appropriate.

For example, the thrust magnetic bearing 500 according to the above-described embodiment may be mounted on another type of compressor different from the compressor 10 of a centrifugal system.

### [Functions]

Next, the functions of the thrust magnetic bearing and the refrigerating apparatus according to the present embodiment will be described.

In the first aspect of the present embodiment, the thrust magnetic bearing supports the thrust load of the rotating shaft of the compressor. The thrust magnetic bearing is, for example, the thrust magnetic bearing 500 described above. The compressor is, for example, the compressor 10 described above. The rotating shaft is, for example, the rotating shaft 250 described above. Specifically, the thrust magnetic bearing includes an annular core and a coil assembly. The core is, for example, the above-described core 520. The coil assembly is the above-described coil assembly 530. More specifically, the core is provided with a groove portion having an annular opening on an end surface in the axial direction. The groove portion is, for example, the above-described groove portion 521. The opening is, for example, the above-described opening 521A. The coil assembly includes an annular insulating member and a coil wound around the insulating member, and is accommodated in the groove portion. The insulating member is, for example, the above-described insulating member 540. The coil is, for example, a coil 550. The outer diameter of the opening is shorter than the outer diameter of the coil assembly partially or entirely in the circumferential direction, or the inner diameter of the opening is longer than the inner diameter of the coil assembly partially or entirely in the circumferential direction. The outer diameter of the opening is, for example, the above-described outer diameter D2, and the outer diameter of the coil assembly is, for example, the above-described outer diameter d2. The inner diameter of the opening is, for example, the inner diameter D1, and the inner diameter of the coil assembly is, for example, the inner diameter d1.

Thus, in the thrust magnetic bearing, the coil assembly accommodated in the groove portion and the portion of the core (for example, the protruding portions 520cp1, 520cp2 described above) adjacent to the opening in the groove portion in the radial direction, can be arranged so as to overlap in the radial direction. Therefore, the thrust magnetic bearing can restrict the movement of the coil assembly toward the opening side of the groove portion and properly hold the coil assembly in the groove portion of the core.

In the second aspect of the present embodiment, on the premise of the first aspect, the groove portion may include a housing portion accommodating the coil assembly. The housing portion is, for example, the housing portion 521B. Further, the outer diameter of the opening may be shorter than the outer diameter of the housing portion in a part of or an entirety of the circumferential direction, or the inner diameter of the opening may be longer than the inner diameter of the housing portion in a part of or an entirety of the circumferential direction. The outer diameter of the housing portion may be, for example, the above-described outer diameter D3 and the inner diameter of the housing portion may be, for example, the above-described inner diameter D4. The axial dimension of the housing portion may be greater than or equal to than the axial dimension of the coil assembly in a whole circumferential direction. The axial dimension of the housing portion is, for example, the above-described width W1. The axial dimension of the coil assembly is, for example, the above-described width w1.

Thus, the thrust magnetic bearing can reduce the force acting on the insulating member of the coil assembly from the core when the coil assembly is accommodated in the groove portion of the core. Therefore, the thrust magnetic bearing can reduce deterioration and damage of the insulating member of the coil assembly during use.

In the third aspect of the present embodiment, on the premise of the above-described first or second aspect, the outer diameter of the opening may be shorter than the outer diameter of the coil assembly in a part or a whole of the circumferential direction, and the difference between the outer diameter of the opening and the outer diameter of the coil assembly may be 1% or less of the outer diameter of the coil assembly. Alternatively, the inner diameter of the opening may be longer than the inner diameter of the coil assembly in a part or a whole of the circumferential direction, and the difference between the inner diameter of the opening and the inner diameter of the coil assembly may be 1% or less of the inner diameter of the coil assembly. The difference between the outer diameter of the opening and the outer diameter of the coil assembly or the difference between the inner diameter of the opening and the inner diameter of the coil assembly is the above-described difference δ.

Thus, the operator or the like can insert the coil assembly from the opening of the groove portion into the inside by, for example, light press-fitting. Therefore, the operator or the like can relatively easily assemble the coil assembly into the core.

In the fourth aspect of the present embodiment, on the premise of any one of the first to third aspects described above, the outer diameter of the opening may be greater than or equal to the outer diameter of the coil assembly in the entire circumferential direction and the inner diameter of the opening may be less than or equal to the inner diameter of the coil assembly in the entire circumferential direction in a state before the coil assembly is accommodated in the groove portion.

Thus, the operator or the like can relatively easily insert the coil assembly into the inside from the opening of the groove portion. Therefore, the operator or the like can relatively easily assemble the coil assembly into the core.

In the fifth aspect of the present embodiment, on the premise of the fourth aspect described above, the core may include a first core portion and a second core portion attached to the first core portion. The first core portion is, for example, the core portion 520C described above. The second core portion is, for example, the above-described core portion 520D. In a state where the second core portion is attached to the first core portion, the outer diameter of the opening may be shorter than the outer diameter of the coil assembly in a part of or an entirety of the circumferential direction. Alternatively, the inner diameter of the opening may be longer than the inner diameter of the coil assembly in a part of or an entirety of the circumferential direction.

Thus, in a state before the second core portion is attached to the first core portion, the operator or the like can relatively easily insert the coil assembly from the opening of the groove portion, and thereafter, by attaching the second core portion, the coil assembly can be held in the groove portion of the core. Therefore, the operator or the like can relatively easily attach the coil assembly to the core, and the thrust magnetic bearing can properly hold the coil assembly in the groove portion of the core.

In the sixth aspect of the present embodiment, on the premise of the fourth embodiment, the core may include a third core portion and a fourth core portion integrally formed with the third core portion. The third core portion is, for example, the above-described core portion 520E. The fourth core portion is, for example, the above-described protruding portion 520F. In the state before the coil assembly is accommodated in the groove portion, the outer diameter of the opening may be greater than or equal to the outer diameter of the coil assembly in the entire circumferential direction, and the outer diameter of the opening may be less than the outer diameter of the coil assembly in a part of or an entirety of the circumferential direction due to deformation of the fourth core portion by an external force after the coil assembly is accommodated in the groove portion. Alternatively, in the state before the coil assembly is accommodated in the groove portion, the inner diameter of the opening may be less than or equal to the inner diameter of the coil assembly, and the inner diameter of the opening may be longer than the inner diameter of the coil assembly in a part of or an entirety of the circumferential direction due to deformation of the fourth core portion by an external force after the coil assembly is accommodated in the groove portion.

Thus, the operator or the like can relatively easily insert the coil assembly from the opening of the groove portion in the state before the deformation of the fourth core by an external force, and can subsequently hold the coil assembly in the groove portion of the core by deforming the fourth core by an external force. Therefore, the operator or the like can relatively easily attach the coil assembly to the core, and the thrust magnetic bearing can properly hold the coil assembly in the groove portion of the core.

In the seventh aspect of the present embodiment, on the premise of the fourth embodiment, in the state before the coil assembly is accommodated in the groove portion, the outer diameter of the coil assembly is less than or equal to the outer diameter of the opening in the entire circumferential direction, and the outer diameter of the coil assembly may be longer than the outer diameter of the opening in a part of or an entirety of the circumferential direction due to deformation of the insulating member by an external force after the coil assembly is accommodated in the groove portion. Alternatively, in the state before the coil assembly is accommodated in the groove portion, the inner diameter of the coil assembly is greater than or equal to the inner diameter of the opening in the entire circumferential direction, and the inner diameter of the coil assembly may be less than the inner diameter of the opening in a part of or an entirety of the circumferential direction due to deformation of the insulating member by an external force after the coil assembly is accommodated in the groove portion.

Thus, the operator or the like can relatively easily insert the coil assembly from the opening in the groove portion before deforming the insulating member by an external force, and then by deforming the insulating member by an external force, the coil assembly can be held in the groove portion of the core. Therefore, an operator or the like can relatively easily attach the coil assembly to the core, and the thrust magnetic bearing can properly hold the coil assembly in the groove portion of the core.

In the eighth aspect of the present embodiment, a refrigerating apparatus may include the thrust magnetic bearing of any one of the first to seventh aspects described above. The refrigerating apparatus is, for example, the refrigerating apparatus 1 described above.

Thus, the air-conditioning device can use the thrust magnetic bearing that can properly hold the coil assembly in the groove portions of the core.

Although the embodiment has been described above, it will be understood that various changes in the form and details can be made without departing from the spirit and scope of the claims.

Finally, the present application is based upon and claims priority to Japanese patent application no. 2024-156742, filed on September 10, 2024, the entire contents of which are incorporated herein by reference.

### Reference Signs List

1 refrigerating apparatus
10 compressor
20 heat exchanger
25 fan
30 expansion mechanism
40 heat exchanger
45 fan
100 casing
200 impeller
250 rotating shaft
260 collar
300 electric motor
500 thrust magnetic bearing
510 electromagnet
520 core
520A core portion
520B core portion
520C core portion
520C1 concave portion
520cp1 protruding portion
520cp2 protruding portion
520D core portion
520E core portion
520F protruding portion
520G core portion
520H core portion
521 groove portion
521A opening
521B housing portion
530 coil assembly
540 insulating member
540A deformation portion
541 inner peripheral portion
542 axial end portion
543 axial end portion
544 outer peripheral portion
550 coil
AX axis
d1 inner diameter
d1b inner diameter
d2 outer diameter
d2b outer diameter
D1 inner diameter
D2 outer diameter
D2b outer diameter
D3 outer diameter
D4 inner diameter
w1 width
W1 width
δ difference

## Claims

1. A thrust magnetic bearing for supporting a thrust load on a rotating shaft (250) of a compressor (10), the thrust magnetic bearing comprising:
an annular core (520) provided with a groove portion (521) having an annular opening (521A) at an end face in an axial direction; and
a coil assembly (530) including an annular insulating member (540) and a coil (550) wound around the insulating member (540), the coil assembly (530) being accommodated in the groove portion (521), wherein
an outer diameter (D2) of the opening (521A) is shorter than an outer diameter (d2) of the coil assembly (530) in a part of or an entirety of a circumferential direction, or an inner diameter (D1) of the opening (521A) is longer than an inner diameter (d1) of the coil assembly (530) in a part of or an entirety of the circumferential direction.

2. The thrust magnetic bearing according to claim 1, wherein
the groove portion (521) includes a housing portion (521B) in which the coil assembly (530) is accommodated,
the outer diameter (D2) of the opening (521A) is shorter than an outer diameter (D3) of the housing portion (521B) in a part of or an entirety of the circumferential direction, or the inner diameter of the opening (521A) is longer than an inner diameter (D4) of the housing portion (521B) in a part of or an entirety of the circumferential direction, and
a dimension (W1) in an axial direction of the housing portion (521B) is greater than or equal to a dimension (w1) in the axial direction of the coil assembly (530) in an entirety of the circumferential direction.

3. The thrust magnetic bearing according to claim 1 or 2, wherein the outer diameter (D2) of the opening (521A) is shorter than the outer diameter (d2) of the coil assembly (530) in a part of or an entirety of the circumferential direction, and a difference (δ) between the outer diameter (D2) of the opening (521A) and the outer diameter (d2) of the coil assembly (530) is less than or equal to 1% of the outer diameter (d2) of the coil assembly (530), or the inner diameter (D1) of the opening (521A) is longer than the inner diameter (d1) of the coil assembly (530) in a part of or an entirety of the circumferential direction, and a difference (δ) between the inner diameter (D1) of the opening (521A) and the inner diameter (d1) of the coil assembly (530) is less than or equal to 1% of the inner diameter (d1) of the coil assembly (530).

4. The thrust magnetic bearing according to any one of claims 1 to 3, wherein in a state before the coil assembly (530) is accommodated in the groove portion (521), the outer diameter (D2) of the opening (521A) is greater than or equal to the outer diameter (d2) of the coil assembly (530) in an entirety of the circumferential direction, and the inner diameter (D1) of the opening (521A) is less than or equal to the inner diameter (d1) of the coil assembly (530) in an entirety of the circumferential direction.

5. The thrust magnetic bearing according to claim 4, wherein
the core (520) includes a first core portion (520C) and a second core portion (520D) attached to the first core portion (520C), and
in a state where the second core portion (520D) is attached to the first core portion (520C), the outer diameter (D2) of the opening (521A) is shorter than the outer diameter (d2) of the coil assembly (530) in a part of or an entirety of the circumferential direction, or the inner diameter (D1) of the opening (521A) is longer than the inner diameter (d1) of the coil assembly (530) in a part of or an entirety of the circumferential direction.

6. The thrust magnetic bearing according to claim 4, wherein
the core (520) includes a third core portion (520E) and a fourth core portion (520F) integrally formed with the third core portion (520E), and
in a state before the coil assembly (530) is accommodated in the groove portion (521), the outer diameter (D2) of the opening (521A) is greater than or equal to the outer diameter (d2) of the coil assembly (530) in an entirety of the circumferential direction, and the outer diameter (D2) of the opening (521A) becomes shorter than the outer diameter (d2) of the coil assembly (530) in a part or an entirety of the circumferential direction due to deformation of the fourth core portion (520F) by an external force after the coil assembly (530) is accommodated in the groove portion (521), or in a state before the coil assembly (530) is accommodated in the groove portion (521), the inner diameter (D1) of the opening (521A) is less than or equal to the inner diameter (d1) of the coil assembly (530), and the inner diameter (D1) of the opening (521A) becomes longer than the inner diameter (d1) of the coil assembly (530) in a part or an entirety of the circumferential direction due to deformation of the fourth core portion (520F) by an external force after the coil assembly (530) is accommodated in the groove portion (521).

7. The thrust magnetic bearing according to claim 4, wherein in a state before the coil assembly (530) is accommodated in the groove portion (521), the outer diameter (d2) of the coil assembly (530) is less than or equal to the outer diameter (D2) of the opening (521A) in an entirety of the circumferential direction, and the outer diameter (d2) of the coil assembly (530) becomes longer than the outer diameter (D2) of the opening (521A) in a part or an entirety of the circumferential direction due to deformation of the insulating member (540) by an external force after the coil assembly (530) is accommodated in the groove portion (521), or in a state before the coil assembly (530) is accommodated in the groove portion (521), the inner diameter (d1) of the coil assembly (530) is greater than or equal to the inner diameter (D1) of the opening (521A) in an entirety of the circumferential direction, and the inner diameter (d1) of the coil assembly (530) becomes shorter than the inner diameter (D1) of the opening (521A) in a part or an entirety of the circumferential direction due to deformation of the insulating member (540) by an external force after the coil assembly (530) is accommodated in the groove portion (521).

8. A refrigerating apparatus comprising:
the thrust magnetic bearing (500) according to any one of claims 1 to 7.
